# EUROPEAN PATENT SPECIFICATION

(11) **EP 1 887 764 B1**
(45) Date of publication and mention of the grant of the patent: **17.06.2009**
(21) Application number: 07114156.8
(22) Date of filing: 10.08.2007
(51) Int. Cl.: H04M 1/02

(54) **Portable communication terminal having display unit using panel-type waveguide**
Tragbares Kommunikationsendgerät mit Anzeigeeinheit und paneel-artigem Wellenleiter
Terminal de communication portable ayant une unité d'affichage utilisant un guide d'ondes de type panneau

(30) Priority: 11.08.2006 KR 20060076122
(43) Date of publication of application: 13.02.2008
(73) Proprietor: Samsung Electronics Co., Ltd., Suwon-si, Gyeonggi-Do (KR)
(72) Inventor: Kim, Hyun-Soo, Suwon-si, Gyeonggi-do (KR); Cho, Byung-Duck, Suwon-si, Gyeonggi-do (KR); Lee, Kang-Hoon, Suwon-si, Gyeonggi-do (KR); Kang, In-Kwon, Suwon-si, Gyeonggi-do (KR); Choi, Kwang-Cheol, Suwon-si, Gyeonggi-do (KR); Shin, Young-Shik, Suwon-si, Gyeonggi-do (KR); Kim, Jae-Ho, Suwon-si, Gyeonggi-do (KR)
(74) Representative: Grünecker, Kinkeldey, Stockmair & Schwanhäusser Anwaltssozietät

(56) References cited:
- GB-A- 2 308 486
- US-A1- 2006 146 013

## Description

The present invention relates to portable communication terminals including DMB (Digital Multimedia Broadcasting) phones, game phones, chatting phones, camera phones, MP3 phones, cellular phones, PCSs (Personal Communication System) phones, PDAs (Personal Digital Assistants), and HHPs (Hand-Held Phones), and more particularly to portable communication terminals having a transparent panel and an optical unit visually displaying various types of information.

In general, the term "portable communication terminal" refers to an electronic apparatus that a user can carry to perform wireless communication with a desired partner. Examples of the wireless communication include voice communication, message transmission, file transmission, video communication, and photograph transmission. Portable communication terminals can also act as personal assistants, i.e. they can manage telephone numbers, personal schedules, etc.

To facilitate portability, designs of such portable communication terminals tend not only to be compact, slim, and light, but also move toward providing multimedia capabilities, having a wider variety of functions. For example, portable communication terminals are evolving to provide entertainment content, such as games and video. In addition to basic voice communication, future portable communication terminals are expected to incorporate greater multi-functionality and be capable of multi-purpose utilization (e.g. video communication, games, Internet, and camera).

Conventional portable communication terminals are classified into bar-type terminals and folder-type terminals according to their appearance, together with portability or convenience of use taken into consideration. The bar-type terminals have a single bar-shaped housing, on which a data input/output device, an antenna device, and a transmission/reception device are mounted. The folder-type terminals have a single bar-shaped housing and a folder rotatably connected to the housing by a hinge device so that the folder can fold onto or unfold from the housing. For example, folder-type portable communication terminals have keys arranged on the body and a display unit positioned on the folder, which is rotatably coupled to the body by a hinge unit. This type of terminal has the advantages of compactness and portability. U.S. Patent No. 6,865,406 discloses a folder-type portable communication terminal having a hinge unit and a camera lens housing mounted on the hinge unit.

However, folder-type portable communication terminals have a problem in that repeated operations for folding/unfolding the folder eventually break the flexible circuit, which electrically connects the folder, particularly its display unit, to the body, particularly its main PCB (Printed Circuit Board). This problem is caused by the fact that the flexible circuit extends via the hinge device. Particularly, the flexible circuit is subjected to the rotational force resulting from operations for folding/unfolding the folder.

In addition, portable communication terminals may be classified into swing-type terminals and sliding-type terminals according to the manner of opening/closing them. The swing-type portable communication terminals have two housings coupled to each other in such a manner that one housing swings to be opened or closed relative to the other while they face each other. The sliding-type portable communication terminals have two housings coupled to each other in such a manner that one housing slides along the longitudinal direction to be opened or closed relative to the other housing.

For example, sliding-type portable communication terminals have a number of keys arranged on the body and a display unit positioned on the slider, which is coupled to the body by a sliding module facing the body. Such a type of portable communication terminal is advantageous in that it provides a wide display unit and that they can be opened/closed conveniently. U.S. Patent No. 6,822,871 discloses the detailed construction of a sliding-type portable communication terminal having a number of keys arranged on the main housing and a display unit positioned on the sliding-housing. U.S. Patent Application No. 10/822,380 discloses a swing-type portable communication terminal in detail.

However, conventional sliding-type portable communication terminals have a problem in that repeated operations for sliding the sliding-housing induce fatigue (e.g. stress) on the bending portion of the flexible circuit, which electrically connects the main and sliding-housings to each other, and eventually break the circuit. Furthermore, the use of a flexible circuit for electrically connecting the display device of the sliding-housing to the main PCB of the main housing increases complexity and makes it harder to assemble the terminals.

In addition, conventional swing-type portable communication terminals have a problem in that repeated use of the swing housing induces fatigue (e.g. stress) on the flexible circuit that electrically connects the main and swing housings to each other, and eventually breaks the circuit. Furthermore, the fact that the flexible circuit generally extends via a swing hinge module, which connects the main and swing housings to each other while being able to swing, makes it harder to assemble the terminals.

Conventional communication terminals have another problem in that LCDs (Liquid Crystal Displays), which are commonly used as their display devices, are thick and have standardized horizontal and vertical sizes. This limits the exterior design of the terminals from the designer's point of view.

US 2006/146013 A1 relates to electronic devices with displays. In an example, an electronic device includes a display element and a first body containing an image generation apparatus and an optical system. Further, the display element is movably attached to the first body such that the display element is capable of moving in at least one plane parallel to the first body. In another example, the display element is a substrate guided optical element. The substrate guided optical element enables the projection of a virtual image with a larger field of view and yet results in a 40% reduction in the device volume when compared to conventional optics such as optical wave guides.

GB-A-2 308 486 relates to a display apparatus for handheld equipment. The display apparatus comprises a light source, a liquid crystal display and a screen onto which the image from the liquid crystal display is projected. The screen is translucent and magnifies the image. The screen may be at least partially reflective and be constituted by a keypad.

Accordingly, the present invention has been made to solve the above-mentioned problems occurring in the prior art, and it is an aspect of the present invention to provide a portable communication terminal having a display unit electrically connected to a body without a flexible circuit so that any problem resolving from breakage of the flexible circuit is avoided.

Thus, it is the object of the present invention to improve the flexibility of prior art terminals. This object is solved by the subject matter of the independent claims.

Preferred embodiments are defined in the dependent claims.

Another aspect of the present invention provides for a portable communication terminal having a panel-type waveguide, using an optical unit for a data output function, slimming the body, ensuring flexibility in exterior design, and providing an aesthetic appearance.

Furthermore, another aspect of the present invention provides for a portable communication terminal having a panel-type waveguide, which can be used as the data output device of any type of portable communication terminal.

In order to accomplish these aspects of the present invention, there is provided a portable communication terminal having a display unit using a panel-type waveguide, the portable communication terminal includes a body having an optical unit; a panel-type waveguide having a display unit mounted on the body while facing the body, displaying a source image emitted by the optical unit; and an information input/output device positioned in parallel with the panel-type waveguide while being adjacent to the display unit.

In accordance with another aspect of the present invention, there is provided a portable communication terminal having a display unit using a panel-type waveguide, the portable communication terminal includes a body; a panel-type waveguide having a display unit adapted to slide on the body while continuously facing the body, exposing/covering a user interface unit on an upper surface of the body and displaying a source image coming from the body; and an optical unit mounted on the panel-type waveguide, moving while being received in the body and emitting a source image to the panel-type waveguide.

In accordance with a further aspect of the present invention, there is provided a portable communication terminal having a display unit using a panel-type waveguide, the portable communication terminal includes a body; a panel-type waveguide having a display unit adapted to swing on the body while continuously facing the body, exposing/covering a user-interface unit on an upper surface of the body and display a source image coming from the body; and an optical unit integrally mounted on the panel-type waveguide, moving while being received in the body and emitting a source image to the panel-type waveguide.

The above and other features, aspects, and advantages of the present invention will be more apparent from the following detailed description, when taken in conjunction with the accompanying drawings, in which:
FIG. 1 is a perspective view of a bar-type portable communication terminal according to a first embodiment of the present invention;
FIG. 2 is a lateral view of the terminal shown in FIG. 1 when a light source illuminates an optical unit;
FIG. 3 is a perspective view of a sliding-type portable communication terminal according to a second embodiment of the present invention;
FIG. 4 is a perspective of the terminal according to the second embodiment of the present invention, when its display unit has been fully slid;
FIG. 5 is a front view of the terminal shown in FIG. 4, which has an optical unit mounted thereon;
FIG. 6 is a lateral view of the terminal shown in FIG. 4, when the optical unit emits a source image to the display unit;
FIG. 7 is a perspective view of a swing-type portable communication terminal according to a third embodiment of the present invention;
FIG. 8 is a perspective view of the terminal according to the third embodiment of the present invention, when its display unit has swung about 90°;
FIG. 9 is a front view of the terminal shown in FIG. 8 when viewed along arrow A;
FIG. 10 is a front view of the terminal shown in FIG. 8 when viewed along arrow B;
FIG. 11 is a perspective view of the terminal according to the third embodiment of the present invention when its display unit has swung about 180°;
FIG. 12 is a lateral view of the terminal shown in FIG. 11 when its optical unit emits a source image to the display unit; and
FIG. 13 shows the brief construction of an optical unit employed by a portable communication terminal according to the present invention.

Hereinafter, embodiments of the present invention will be described in detail with reference to the accompanying drawings. In the following description of the present invention, a detailed description of known functions and configurations incorporated herein is omitted to avoid making the subject matter of the present invention unclear.

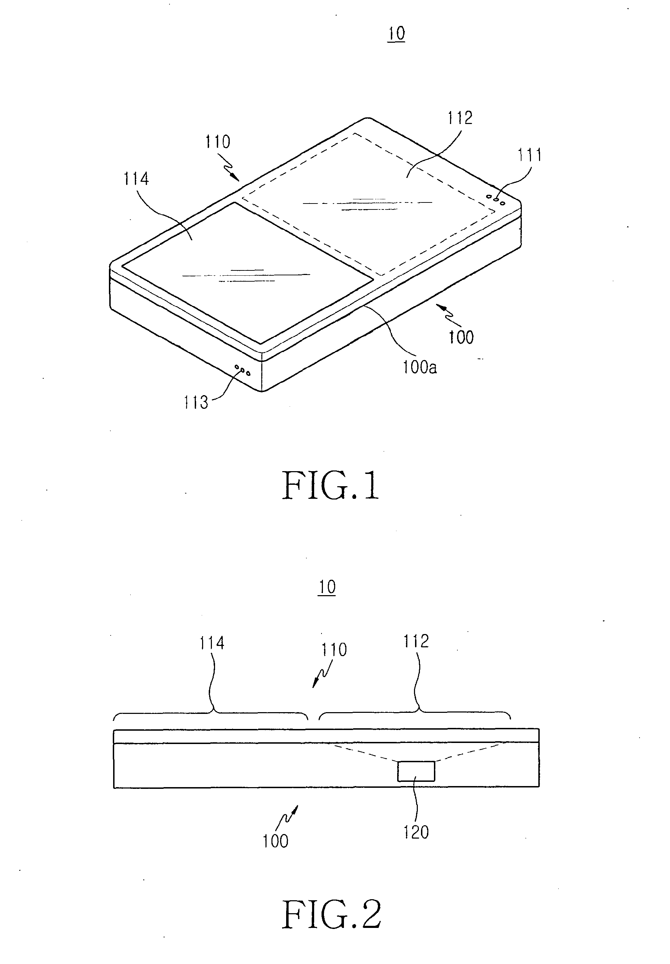

Referring to FIGs. 1 and 2, a bar-type portable communication terminal 10 according to a first embodiment of the present invention employs a panel-type waveguide 110 as its data output device. Particularly, the terminal 10 includes a body 100, a panel-type waveguide 110 mounted on the body 100, displaying data, and an information input/output device 114 positioned on the panel-type waveguide 110. The panel-type waveguide 110 acts as a data output device for guiding source images so that they are visually displayed. The guided source images are two-dimensionally displayed on the panel-type waveguide 110, which is preferably made of a transparent material as a whole.

The body 100 has the shape of a bar, and incorporates an optical unit 120, the detailed construction of which will be described later. The panel-type waveguide 110 has a display unit 112 facing the upper surface 100a of the body 100, displaying source images emitted by the optical unit 120. The information input/output device 114 is positioned in parallel with the panel-type waveguide 110, particularly the display unit 112, as a single unit while being adjacent to the display unit 112.

The information input/output device 114 may consist of a touch screen or a touch-sensitive panel, inputting desired data based on a user's touching operations and outputting the input data.

The panel-type waveguide 110 has a shape corresponding to that of the body 100, and is mounted on the body 100, covering the upper surface 100a. As mentioned above, the display unit 112 and the information input/output device 114 are positioned on the upper and lower portions of the body 100, respectively. In consideration of the distance between the ears and mouth of a user, a speaker 111 and a microphone 113 are positioned near the upper and lower ends of the panel-type waveguide 110 and the body 100, respectively. The body 100 has a battery pack (not shown) positioned on its bottom surface.

When the optical unit 120 emits a source image, the corresponding image is displayed on the screen, i.e. the display unit 112.

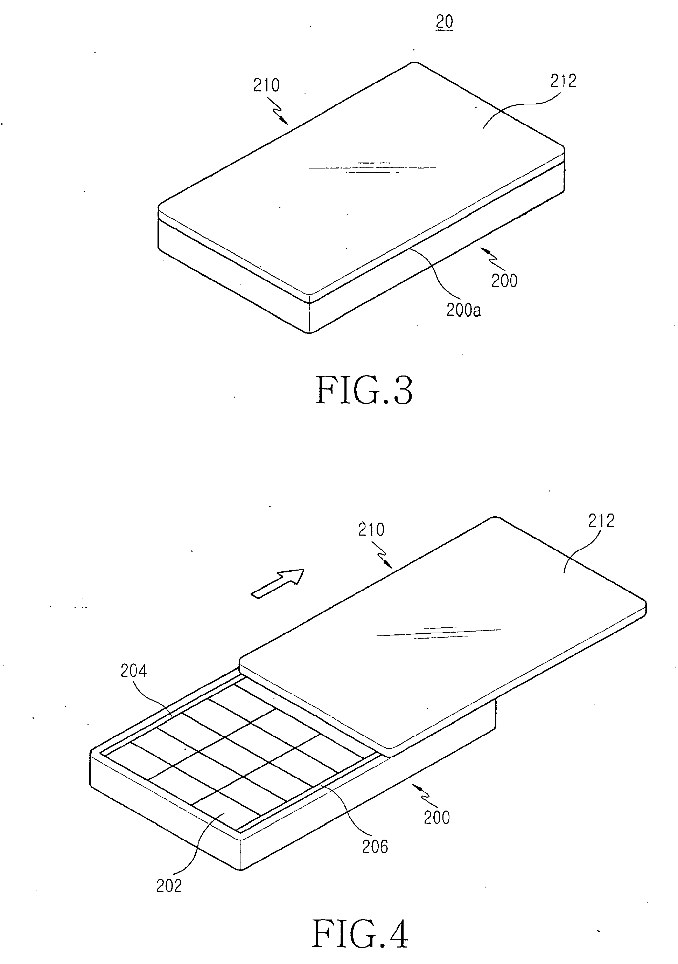

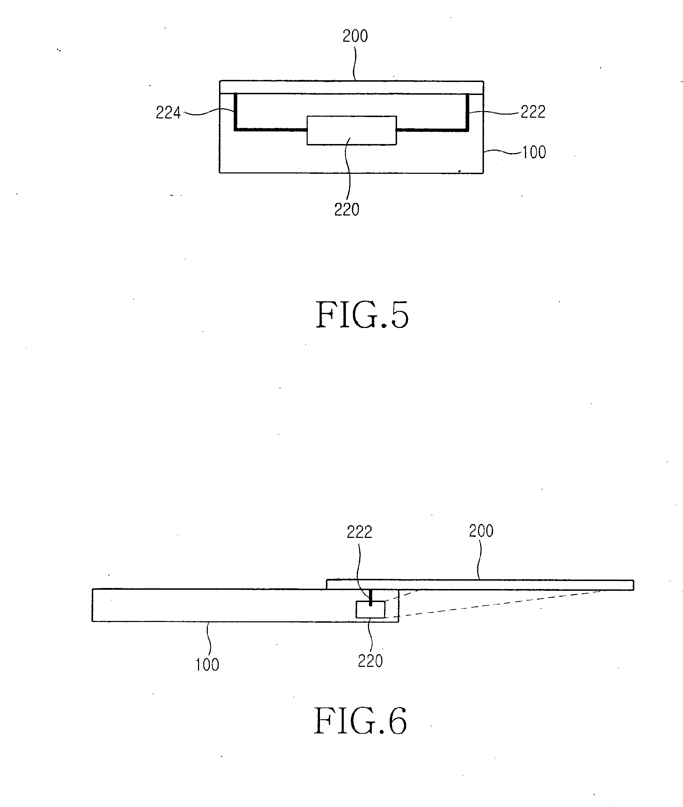

Referring to FIGs. 3 to 6, the construction of a portable communication terminal 20 according to a second embodiment of the present invention will now be described. As shown in FIGs. 3 to 6, the terminal 20 employs a panel-type waveguide 210, which is adapted to slide, as the terminal's data output device. Particularly, the terminal 20 includes a body 200, a panel-type waveguide 210 mounted on the body 200, sliding in the longitudinal direction of the body 200 and display data, and an optical unit 220 mounted on the panel-type waveguide 210, moving while being received in the body 200 and provide the panel-type waveguide 210 with source images. The panel-type waveguide 210 acts as a data output device for guiding source images so that they are visually displayed. The guided source images are two-dimensionally displayed on the panel-type waveguide 210, which is preferably made of a transparent material as a whole. The panel-type waveguide 210 is adapted to slide while continuously facing an upper surface 200a of the body 200 and expose/cover a predetermined region of the body 200.

The body 200 has the shape of a bar. The body 200 has a user-interface unit, e.g. an array of keys 202, positioned on its upper surface 200a in such a manner that, according to whether or not the panel-type waveguide 210 slides, the user-interface unit is exposed/covered. The optical unit 220 is positioned beneath the keys 202 and adapted to move together with the panel-type waveguide 210. The user-interface unit consists of an array of keys 202 (e.g. 3×4 array), which are pressed to input desired data. The panel-type waveguide 210 has a display unit 212 facing the upper surface 200a of the body 200, displaying source images emitted by the optical unit 220. The display unit 212 covers at least half the area of the panel-type waveguide 210.

The panel-type waveguide 210 has a shape corresponding to that of the body 200 and is large enough to completely cover the upper surface 200a of the body 200. FIG. 3 shows the panel-type waveguide 210 when completely covering the body 200, and FIG. 4 shows it when fully exposing the body 200.

The optical unit 220 is coupled to the panel-type waveguide 210 by connectors 224 and 224, moving together with the panel-type waveguide 210 as a single unit. When the panel-type waveguide 210 is fully moved away from the body 200, the panel-type waveguide 210 guides source images from the optical unit 220 and displays them.

In FIG. 4, reference numerals 204 and 206 refer to guide openings in which the connectors 222 and 224 move.

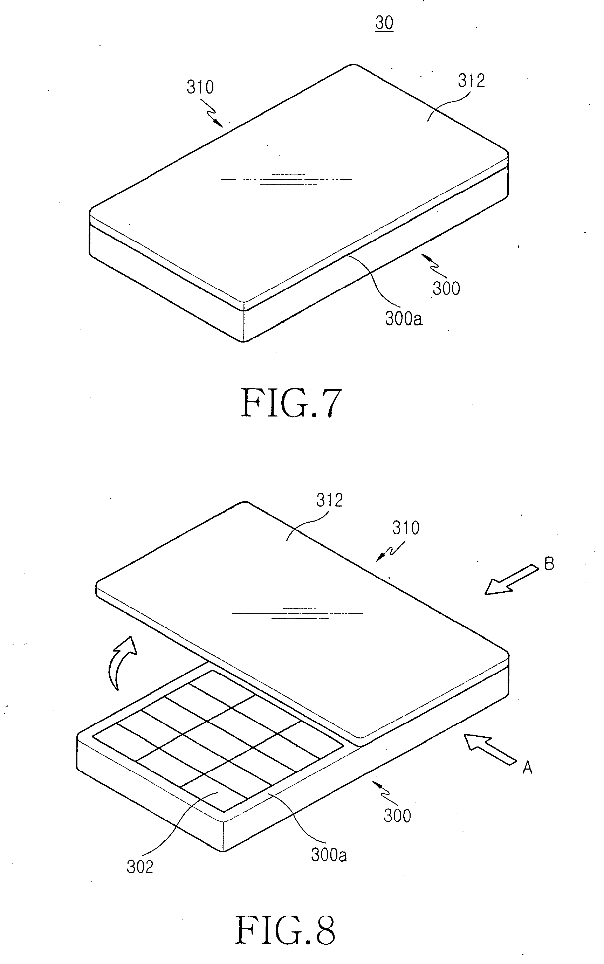

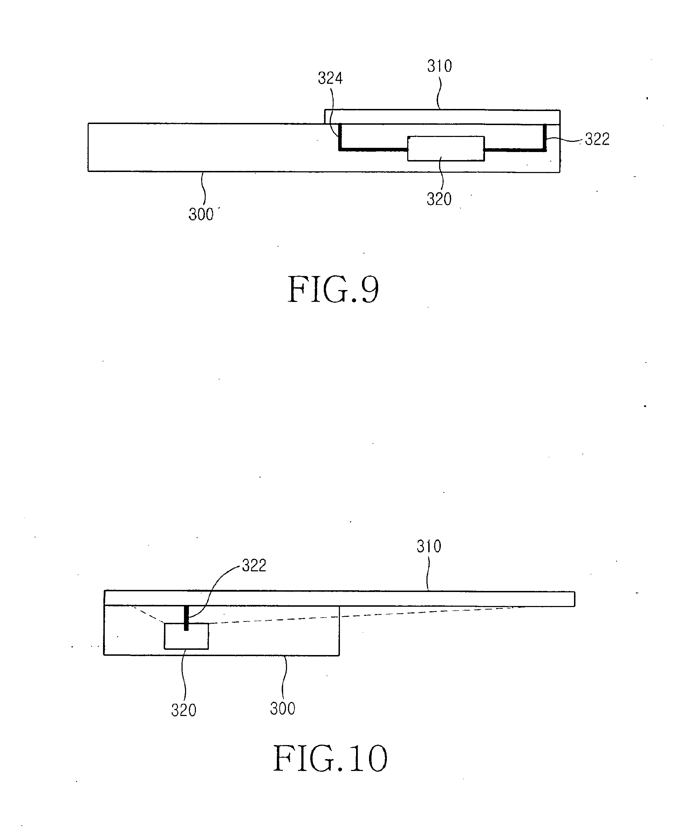

Referring to FIGs. 7 to 12, the construction of a portable communication terminal 30 according to a third embodiment of the present invention will now be described. As shown in FIGs. 7 to 12, the terminal 30 employs a panel-type waveguide, which is adapted to swing, as its data output device. Particularly, the terminal 30 includes a body 300, a panel-type waveguide 310 mounted on the body 300, swinging and displaying data, and an optical unit 320 integrally mounted on the panel-type waveguide 310, moving while being received in the body 300 and provide the panel-type waveguide 310 with source images. The panel-type waveguide 310 acts as a data output device for guiding source images so that they are visually displayed. The guided source images are two-dimensionally displayed on the panel-type waveguide 310.

The panel-type waveguide 310 has a display unit 312 facing the upper surface 300a of the body 300 (i.e. positioned in parallel with the upper surface), display source images emitted by the optical unit 320.

The body 300 has the shape of a bar. The body 300 has a user-interface unit, e.g. an array of keys 302, positioned on its upper surface 300a in such a manner that, according to whether or not the panel-type waveguide 310 slides, the user-interface unit is exposed/covered. The optical unit 320 is positioned beneath the keys 302 and adapted to move together with the panel-type waveguide 310. The user-interface unit consists of an array of keys 302 (e.g. 3×4 array), which are pressed to input desired data. The panel-type waveguide 310 has a display unit 312 facing the upper surface 300a of the body 300, displaying source images emitted by the optical unit 320. The display unit 312 covers at least half the area of the panel-type waveguide 310.

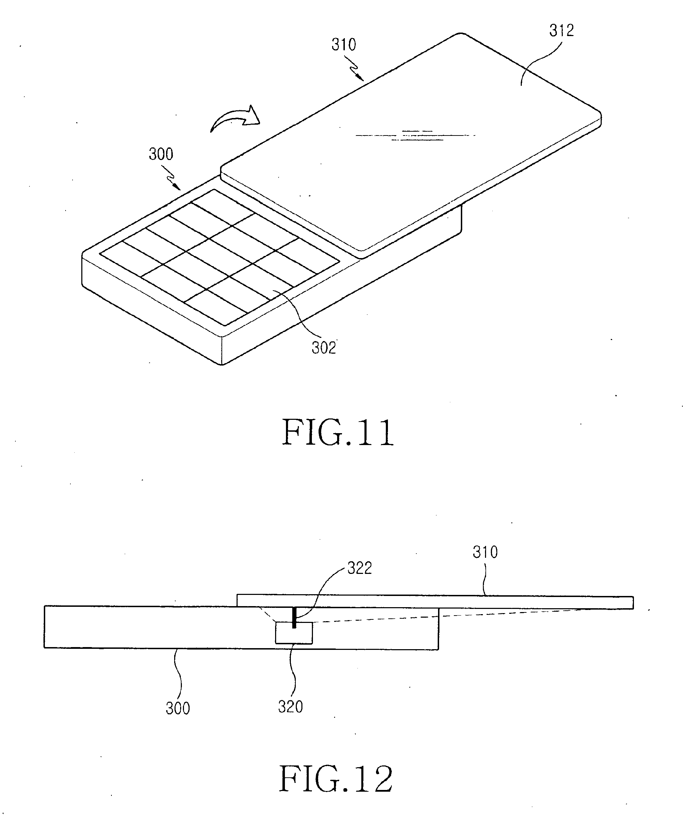

The panel-type waveguide 310 has a shape corresponding to that of the body 300 and is large enough to completely cover the upper surface 300a of the body 300. FIG. 7 shows the panel-type waveguide 310 when it completely covers the body 300, FIG 8 shows it when it has swung about 90° and is perpendicular to the body 300, and FIG. 11 shows it when it has swung about 180° and is parallel to the longitudinal direction of the body 300. The keys 302 on the body 300 are exposed/covered according to whether or not the panel-type waveguide 310 has swung. Particularly, when the panel-type waveguide 310 has swung about 90° or 180°, the keys 302 are completely exposed.

The optical unit 320 is coupled to the panel-type waveguide 310 by connectors 322 and 324, moving together with it as a single unit. When the panel-type waveguide 310 is fully moved away from the body 300, the panel-type waveguide 310 guides source images from the optical unit 320 and displays them.

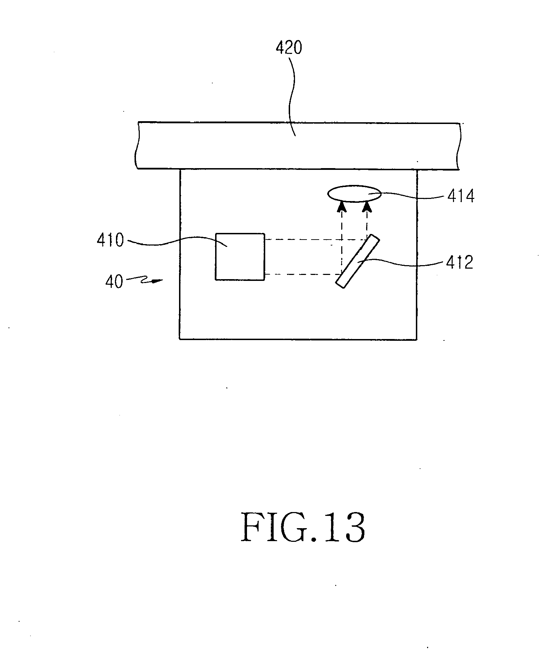

Referring to FIG. 13, an optical unit 40 employed by a portable communication terminal according to the present invention includes an image source unit 410 as a micro projector, a mirror 412, and a lens system 414. The image source unit 410 emits source images, the path of which is modified by the mirror 412. After being reflected by the mirror 412, the images are diffused when they go through the lens system 414. The diffused images going through the lens system are emitted on a panel-type waveguide 420. The mirror 412 or the lens system 414 may be stationary or rotatable so that the diffused images can be directed in a desired direction. The image source unit 410 may include a conventional light source and a micro LCD. In this case, the micro LCD displays images, which are emitted by the light source, as the source images.

Although it has been assumed in the above description that the panel-type waveguide according to the present invention is used as a screen, on which source images emitted by the optical unit are two-dimensionally displayed, the panel-type waveguide may be replaced with a three-dimensional hologram screen so that source images emitted by the optical unit are three-dimensionally displayed on a plane spaced from the hologram screen by a predetermined distance.

While the invention has been shown and described with reference to certain preferred embodiments thereof, it will be understood by those skilled in the art that various changes in form and details may be made therein without departing from the scope of the invention as defined by the appended claims.

## Claims

1. A portable communication terminal (20) having a display unit using a panel-type waveguide, the portable communication terminal comprising:
a body (200);
a panel-type waveguide (210) for longitudinally sliding on the body while continuously facing the body, exposing/covering a user-interface unit on an upper surface of the body, the panel-type waveguide having a display unit for displaying a source image coming from the body; and
an optical unit (220) for emitting a source image to the panel-type waveguide, the optical unit disposed within the body and fixedly connected to the panel-type waveguide for moving together.

2. The portable communication terminal as claimed in claim 1, the optical unit comprising:
a image source;
a mirror for modifying a path of an image emitted by the image source; and
a lens system for diffusing the image reflected by the mirror.

3. The portable communication terminal as claimed in claim 1, wherein the user-interface unit comprises a plurality of keys on the upper surface of the body.

4. A portable communication terminal (30) having a display unit using a panel-type waveguide, the portable communication terminal comprising:
a body (300) having a user interface unit on the upper surface of the body;
a panel-type waveguide (310) for swinging on the body, the panel-type waveguide having a display unit for displaying a source image coming from the body; and
an optical unit (320) for emitting a source image to the panel-type waveguide, the optical unit being fixedly connected to the panel-type waveguide and for swinging together when the panel-type waveguide swings on the body.

5. The portable communication terminal as claimed in claim 4, wherein the body and the panel-type waveguide have corresponding shapes.

6. The portable communication terminal as claimed in claim 4, the optical unit comprising:
a image source;
a mirror for modifying a path of an image emitted by the image source; and
a lens system for diffusing the image reflected by the mirror.

## Patentansprüche

1. Tragbares Kommunikationsendgerät (20) mit einer Anzeigeeinheit, die einen paneelartigen Wellenleiter verwendet, wobei das tragbare Kommunikationsendgerät umfasst:
einen Körper (200);
einen paneelartigen Wellenleiter (210) zum längs an dem Körper erfolgenden Gleitverschieben bei fortwährendem Zugewandtsein zu dem Körper, wodurch eine Anwenderschnittstelleneinheit an einer oberen Oberfläche des Körpers freigelegt/bedeckt wird, wobei der paneelartige Wellenleiter eine Anzeigeeinheit zum Anzeigen eines aus dem Körper kommenden Quellenbildes aufweist; und
eine optische Einheit (220) zum Aussenden eines Quellenbildes an den paneelartigen Wellenleiter, wobei die optische Einheit im Inneren des Körpers angeordnet und fest mit dem paneelartigen Wellenleiter für eine gemeinsame Bewegung verbunden ist.

2. Tragbares Kommunikationsendgerät nach Anspruch 1, wobei die optische Einheit umfasst:
einen Bildquelle;
einen Spiegel zum Modifizieren eines Weges eines von der Bildquelle ausgesendeten Bildes; und
ein Linsensystem zum Zerstreuen des von dem Spiegel reflektierten Bildes.

3. Tragbares Kommunikationsendgerät nach Anspruch 1, wobei die Anwenderschnittstelleneinheit eine Mehrzahl von Tasten an der oberen Oberfläche des Körpers umfasst.

4. Tragbares Kommunikationsendgerät (30) mit einer Anzeigeeinheit, die einen paneelartigen Wellenleiter verwendet, wobei das tragbare Kommunikationsendgerät umfasst:
einen Körper (300) mit einer Anwenderschnittstelleneinheit an der oberen Oberfläche des Körpers;
einen paneelartigen Wellenleiter (310) zum Verschwenken an dem Körper, wobei der paneelartige Wellenleiter eine Anzeigeeinheit zum Anzeigen eines aus dem Körper kommenden Quellenbildes aufweist; und
eine optische Einheit (320) zum Aussenden eines Quellenbildes an den paneelartigen Wellenleiter, wobei die optische Einheit fest mit dem paneelartigen Wellenleiter verbunden ist und dem gemeinsamen Verschwenken bei einer Verschwenkung des paneelartigen Wellenleiters an dem Körper dient.

5. Tragbares Kommunikationsendgerät nach Anspruch 4, wobei der Körper und der paneelartige Wellenleiter einander entsprechende Formen aufweisen.

6. Tragbares Kommunikationsendgerät nach Anspruch 4, wobei die optische Einheit umfasst:
eine Bildquelle;
einen Spiegel zum Modifizieren eines Weges eines von der Bildquelle ausgesendeten Bildes; und
ein Linsensystem zum Zerstreuen des von dem Spiegel reflektierten Bildes.

## Revendications

1. Terminal de communication portatif (20) ayant une unité d'affichage utilisant un guide d'ondes du type panneau, le terminal portatif comprenant :
un corps (200) ;
un guide d'ondes du type panneau (210) destiné à coulisser longitudinalement sur le corps tout en étant en permanence tourné vers le corps, à exposer/recouvrir une unité d'interface utilisateur sur une surface supérieure du corps, le guide d'ondes du type panneau ayant une unité d'affichage destinée à afficher une image source provenant du corps ; et
une unité optique (220) destinée à émettre une image source vers le guide d'ondes du type panneau, l'unité optique étant disposée à l'intérieur du corps et étant reliée de façon fixe au guide d'ondes du type panneau pour se déplacer avec ce dernier.

2. Terminal de communication portatif selon la revendication 1, l'unité optique comprenant :
une source d'images ;
un miroir pour modifier le chemin d'une image émise par la source d'images ; et
un système de lentilles pour diffuser l'image réfléchie par le miroir.

3. Terminal de communication portatif selon la revendication 1, dans lequel l'unité d'interface utilisateur comprend une pluralité de touches sur la surface supérieure du corps.

4. Terminal de communication portatif (30) ayant une unité d'affichage utilisant un guide d'ondes du type panneau, le terminal de communication portatif comprenant :
un corps (300) ayant une unité d'interface utilisateur sur la surface supérieure du corps ;
un guide d'ondes du type panneau (310) pouvant basculer sur le corps, le guide d'ondes du type panneau ayant une unité d'affichage pour afficher une image source provenant du corps ; et
une unité optique (320) destinée à émettre une image source vers le guide d'ondes du type panneau, l'unité optique étant reliée de façon fixe au guide d'ondes du type panneau est étant destinée à basculer avec ce dernier lorsque le guide d'ondes du type panneau bascule sur le corps.

5. Terminal de communication portatif selon la revendication 4, dans lequel le corps et le guide d'ondes du type panneau ont des formes correspondantes.

6. Terminal de communication portatif selon la revendication 4, l'unité optique comprenant :
une source d'images ;
un miroir pour modifier le trajet d'une image émise par la source d'image ; et
un système de lentilles pour diffuser l'image réfléchie par le miroir.
